# EUROPÄISCHE PATENTSCHRIFT

(11) **EP 0 653 113 B1**
(45) Veröffentlichungstag und Bekanntmachung des Hinweises auf die Patenterteilung: **16.10.1996**
(21) Anmeldenummer: 93915923.2
(22) Anmeldetag: 15.07.1993
(51) Int. Cl.: H02K 7/14, H02K 5/10, H02K 5/22

(54) **ELEKTROMOTOR MIT EINEM TIEFGEZOGENEN, TOPFFÖRMIGEN MOTORGEHÄUSE**
ELECTRIC MOTOR WITH A DEEP-DRAWN CUP-TYPE HOUSING
MOTEUR ELECTRIQUE A CARTER CUPULIFORME EMBOUTI

(30) Priorität: 29.07.1992 EP 92112959; 19.05.1993 DE 9307692 U
(43) Veröffentlichungstag der Anmeldung: 17.05.1995
(73) Patentinhaber: SIEMENS AKTIENGESELLSCHAFT, 80333 München (DE)
(72) Erfinder: SEUFFERT, Werner, D-97493 Bergrheinfeld (DE); ADAM, Peter, D-97204 Höchberg (DE)
(86) Internationale Anmeldenummer: EP9301864
(87) Internationale Veröffentlichungsnummer: WO9403961

(56) Entgegenhaltungen:
- EP-A- 0 360 623
- WO-A-92/14927
- FR-A- 630 092
- FR-A- 2 530 885
- GB-A- 878 039
- GB-A- 2 027 283

## Beschreibung

Die Erfindung bezieht sich auf einen Elektromotor mit einem tiefgezogenen, topfförmigen Motorgehäuse gemäß Anspruch 1.

Durch die WO,A,9 214 927 ist ein Motor mit einem tiefgezogenen, topfförmigen Motorgehäuse zum Antrieb eines topfbodenseitig anflanschbaren Pumpengehäuses bekannt, wobei der Topfboden einen ebenfalls tiefgezogenen, zapfenförmigen Ansatz mit in Umfangsrichtung wellenartig ausgebildetem Wandquerschnitt derart aufweist, daß der zapfenförmige Ansatz in Form einer Doppelpassung außen in eine Einsteckaufnahme des Pumpengehäuse einsteckbar ist und innen ein Motorlager aufnehmen kann.

Durch die EP-A1-0 472 746 ist ein Kommutatormotor mit einem tiefgezogenen topfförmigen Gehäuse bekannt, an dessen kommutatorseitigem Topfrand ein gegossenes Lagerschild festschraubbar ist, das einen stirnseitig vorstehenden angegossenen hohlzylinderförmigen Lagerhals aufweist, der innen ein Rotorwellen-Kugellager aufnimmt und außen zum Aufstecken einer Flanschöffnung einer anzutreibenden Hydraulikpumpe ausgebildet ist. Von der Topfbodenstirnseite des Motorgehäuses her ist eine Kunststoff-Abdeckkappe mit einem das Motorgehäuse axial außen teilweise übergreifenden Kabelkanal aufgesteckt, durch den eine kommutatorseitig durch eine Motorgehäuseöffnung abgedichtet herausgeführte äußere Anschlußleitung zu einem isoliert in der Stirnseite der topfförmigen Kunststoff-Abdeckkappe gehaltenen Kundenstecker geführt ist.

Gemäß Aufgabe vorliegender Erfindung soll mit einfachen fertigungstechnischen Mitteln bei, insbesondere axial, kompakter Bauweise eine Aufnahme des vom Elektromotor angetriebenen Aggregats bei weitgehend individueller Auslegungsfreiheit sowohl für den Elektromotor als auch für das anzutreibende Aggregat ermöglicht werden.

Die Lösung dieser Aufgabe gelingt erfindungsgemäß durch die Merkmale des Anspruchs 1; vorteilhafte Ausgestaltungen der Erfindung sind jeweils Gegenstand der Unteransprüche.

Bei dem erfindungsgemäßen Elektromotor wird die konstruktiv besonders stabile Topfbodenseite dazu benutzt, beim Tiefziehen des Motorgehäuses gleichzeitig einen axial vorstehenden Lagerhals mitzuziehen, der radial innen zur Aufnahme eines Lagers für die Rotorwelle des Elektromotors und axial außen für die Aufnahme einer Flanschöffnung des stirnseitig aufsteckbaren, vom Elektromotor angetriebenen Aggregats mitausgebildet ist. Der Vorteil die Lageraufnahme des Elektromotors individuell und weitgehend unabhängig von den konstruktiven Maßen der Flanschöffnung des anflanschbaren Aggregats auslegen und eine Feinkalibrierung der Aufnahmeflächen des Lagers der Rotorwelle und der Flanschöffnung des Aggregats andererseits vornehmen zu können, ist dadurch gegeben, daß der Lagerhals axial stufenartig in zumindest zwei Bereiche mit unterschiedlichem radial inneren bzw. radial äußeren Durchmesser unterteilt ist, von denen der eine radial kleinere Bereiche zur radial inneren Lagerungsaufnahme der Rotorwelle und der andere radial größere Bereich zur radial äußeren Befestigungsaufnahme des Aggregats vorgesehen ist.

Die Erfindung sowie weitere vorteilhafte Ausgestaltungen der Erfindung werden im folgenden anhand schematischer Ausführungsbeispiele in der Zeichnung näher erläutert; darin zeigen
- FIG 1: einen axialen Längsschnitt durch einen zum Antrieb eines Hydraulik-Pumpenaggregates vorgesehenen Kommutatormotors mit einer ersten erfindungsgemhßen Lagerhals-Ausbildung,
- FIG 2: eine axiale Draufsicht auf die kommutatorseitige Stirnseite des Kommutatormotors gemäß FIG 1 bei entfernter Abdeckkappe,

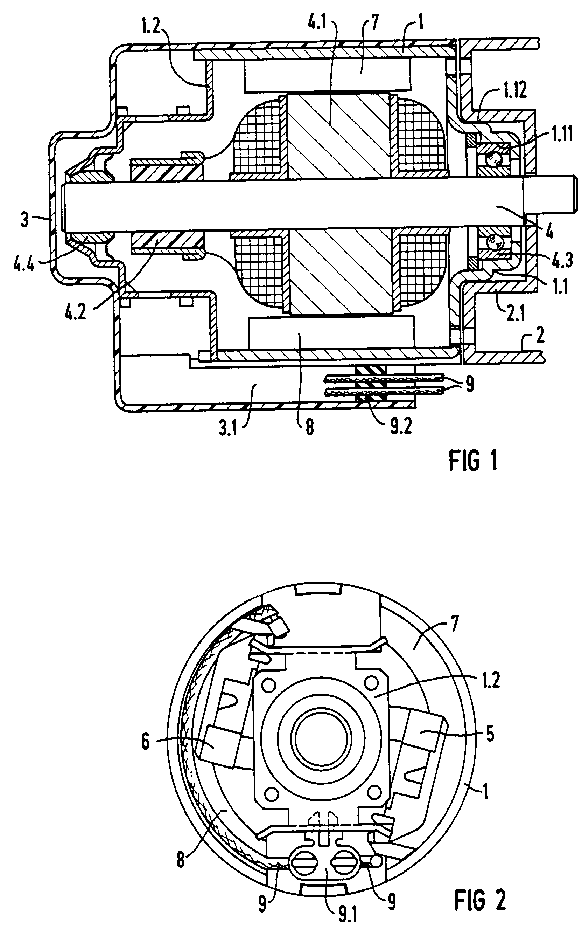

FIG 1 zeigt in einem axialen Längsschnitt einen Kommutatormotor mit einem topfförmigen Motorgehäuse 1, aus dessen Topfboden die verlängerte Rotorwelle 4 mit einem Excenter-Wellenende herausragt; das Excenter-Wellenende treibt in hier nicht näher dargestellter Weise Pumpenstößel einer am Topfboden des Motorgehäuses 1 anflanschbaren Hydraulik-Pumpe eines Kraftfahrzeug-Antiblockier-Bremssystems an, von der lediglich das Gehäuse 2 angedeutet ist. Am Innenumfang des Motorgehäuses 1 sind teilschalenförmige Dauermagnete 7;8 zur Erregung der in einem Rotorpaket 4.1 eingebrachten Rotcrwicklung angeordnet. Die Rotorwicklung ist an einen Kommutator 4.2 angeschlossen, der im Bereich der Topfrandseite des Motorgeshäuses 1 auf der Rotorwelle 4 befestigt ist. Die Rotorwelle 4 ist über ein als Kugellager ausgebildetes erstes Rotorlager 4.3 am topfbodenseitigen Ende des Motorgehäuses 1 und über ein als Kalottenlager ausgebildetes zweites Rotorlager 4.4 am topfrandseitigen Ende des Motorgehäuses 1 gelagert.

Zur Ausrichtung und Aufnahme des an den Topfboden des Motorgehäuses 1 anzuflanschenden Aggregats 2 ist beim Tiefziehen des Motorgehäuses 1 in dessen Topfboden - wie insbesondere aus FIG 1 bzw. FIG 3 ersichtlich - ein nach axial außen vorstehender Lagerhals 1.1 ebenfalls als tiefziehteil und somit im wesentlichen mit einer der Blechdicke des Motorgehäuses 1 entsprechenden Wandstärke miteingeformt; dieser Lagerhals 1.1 dient radial innen als Lagerungsaufnahme für das Kugellager 4.3 der Rotorwelle 4 und radial außen als Befestigungsaufnahme für eine aufsteckbare Flanschöffnung 2.1 des Aggregats 2.

Gemäß FIG 1 ist der Lagerhals 1.1 axial stufenartig in einen ersten, axial außenseitigen Bereich 1.11 mit kleinerem radialen und entprechenden äußeren Durchmesser zur Lagerungsaufnahme der Rotorwelle 4 und einen axial davorliegenden weiteren Bereich 1.12 mit radial größerem äußeren und entsprechend innerem Durchmesser zur Befestigungsaufnahme der Flanschäffnung 2.1 des Aggregats 2 versehen.

Durch die auf unterschiedlicher radialer Weite liegenden Bereiche 1.11 einerseits und 1.12 andererseits beim Ausführungsbeispiel gemäß FIG 1. ist es nicht nur möglich, den mit dem Tiefziehen des Motorgehäuses 1 gleichzeitig spanlos herstellbaren Lagerhals 1.1 individuell an, aus anderen Gründen, vorgegebene Aussenmaße des Kugellagers 4.3 bzw. Innenmaße der Flanschöffnung 2.1 des Aggregats 2 anzupassen, sondern es ist in vorteilhafter Weise insbesondere auch gewährleistet, daß bei einem Kallibrier-Ziehvorgang zur Herstellung einer sehr maßgenauen einen Aufnahmefläche für das eine Bauteil das jeweils unter dem Kallibrierdruck gegebenenfalls radial ausweichende Blechmaterial des Lagerhalses 1.1 nicht in Bereiche ausweichen kann, die als weitere Aufnahmefläche für das andere Bauteil vorgesehen sind. Durch die erfindungsgemäß vorteilhafte axiale gemäß FIG 1 gegenseitige Stufung der Aufnahmebereiche für das Lager der Rotorwelle einerseits bzw. die Flanschöffnung des Aggregats andererseits durch unterschiedliche radiale Weiten ist somit bei einfachster Fertigung ein genauer Aufnahmesitz und eine individuelle Auslegungsmöglichkeit für die aufzunehmenden Bauteile gegeben.

Die radialen Weiten des einen Bereiches 1.11 bzw. des anderen Bereiches 1.12 sind dabei zumindest unter Berücksichtigung der Fertigungs- bzw. Materialtoleranzen derart festgelegt, daß bei einer Kallibrier-Endberarbeitung des jeweils einen Aufnahmesitzes der Aufnahmebereich des jeweils anderen Aufnahmesitzes frei von dabei nach radial innen bzw. radial außen weggedrückten Wandteilen des Lagerhalses 1.1 bleibt.

Um auf einfache fertigungs- und montagetechnische Weise einen für den Einsatz als Antrieb eines Kraftfahrzeug-Antiblockierbremssystems vorteilhaften feuchtigkeitsdichten Abschluß des Elektromotors gewährleisten zu können, ist für das an seinem einen Ende durch den einstückigen Topfboden mit seiner Wellenöffnung 1.15 bereits nach außen leicht abdichtbare Motorgehäuse 1 an dessen Topfrandseite eine axial aufschiebbare topfförmige Isolier-Abdeckkappe 3 dichtend aufgeschoben. Aufgrund dieser einfachen Abdichtung des an seinem anderen Ende durch den Topfboden dicht abgeschlossenen Motorgehäuses 1 ist in vorteilhafter Ausgestaltung der Erfindung gleichzeitig vorgesehen, zur Aufnahme des kommutatorseitigen Lagers 4.4 der Rotorwelle 4 einen ebenfalls in einfachster Weise nur als Biegestanzteil gefertigten Lagerbügel 2 mit zweckmäßigerweise in, insbesondere aus FIG 2 ersichtlicher, integrierter Bürstenhaltervorrichtung für den Kommutator 4.2 beschleifende Bürstenhalter 5;6 auszubilden.

In vorteilhafter Weise ist die Isolier-Abdeckkappe 3 weiterhin dazu benutzt, eine Anschlußleitung für die Rotorwicklung von dem dem Topfboden abgewandten, kommutatorseitigen Ende des Motorgehäuses 1 zu dem topfbodenseitigen Ende des Motorgehäuses 1 zu führen, wobei zur Abdichtung in die Außen-Mantelfläche der Isolier-Abdeckkappe 3 ein tunnelförmiger Kabelkanal 3.1 für eine darin eingelegte Anschlußleitung 9 eingeformt ist, die gegenüber dem Kabelkanal 3.1 an ihrer Austrittsseite durch eine Dichtung 9.2 abgedichtet wird.

Die vorliegende Erfindung ist in den Ausführungsbeispielen anhand einer am Topfboden des Motorgehäuses 1 anflanschbaren Hydraulik-Pumpe dargestellt; selbstverständlich sind im Rahmen vorliegender Erfindung auch andere Aggregate, z.B. von der Rotorwelle 4 antreibbare Lüfteraggregate, an die topfbodenseitige Stirnseite mit dem erfindungsgemäß beim Tiefziehen miteingeformten Lagerhals anflanschbar.

## Patentansprüche

1. Elektromotor mit einem tiefgezogenen, topfförmigen Motorgehäuse (1) zum Antrieb eines stirnseitig an das Motorgehäuse (1) anflanschbaren Aggregats (2), insbesondere einer Hyrdaulikpumpe einer Antiblockier-Bremsvorrichtung, mit den Merkmalen:
a) In den Topfboden des Motorgehäuses (1) ist ein nach axial außen vorstehender Lagerhals (1.1) spanlos durch Tiefziehen mitangeformt;
b) der Lagerhals (1.1) ist radial innen mit einer spanlos durch Tiefziehen angeformten Lagerungsaufnahme für die Rotorwelle (4) des Elektromotors versehen;
c) der Lagerhals (1.1) ist radial außen mit einer spanlos durch Tiefziehen angeformten Befestigungsaufnahme für das Aggregat (2) versehen;
d) der Lagerhals (1.1) ist axial stufenförmig in zumindest zwei Bereiche (1.11;1.12) mit unterschiedlichem radial inneren bzw. radial äußeren Durchmesser unterteilt, von denen der eine radial kleinere und axial äußere Bereich (1.11) zur radial inneren Lagerungsaufnahme der Rotorwelle (4) und der andere radial größere und axial innere Bereich (1.12) zur radial äußeren Befestigungsaufnahme des Aggregats (2) vorgesehen ist.

2. Elektromotor nach Anspruch 1 mit dem Merkmal:
e) Die radialen Weiten des einen Bereichs (1.11) bzw. des anderen Bereichs (1.12) sind entsprechend den korrespondierenden radialen Weiten eines axial einzusetzenden Lagers (4.3) für die Rotorwelle (4) bzw. einer axial aufzusetzenden Flanschöffnung (2.1) des Aggregats (2) festgelegt.

3. Elektromotor nach zumindest einem der vorhergehenden Ansprüche mit dem Merkmal:
f) Die radialen Weiten des einen Bereichs (1.11) bzw. des anderen Bereichs (1.12) sind unter Berücksichtigung der Fertigungs- bzw. Materialtoleranzen derart festgelegt, daß bei einer Kallibrier-Endbearbeitung des jeweils einen Aufnahmesitzes der Aufnahmebereich des jeweils anderen Aufnahmesitzes frei von dabei nach radial innen bzw. radial außen weggedrückten Wandteilen des Lagerhalse (1.1) bleibt.

4. Elektromotor nach zumindest einem der vorhergehenden Ansprüche mit dem Merkmal:
g) Auf das topfförmige Motorgehäuse (1) ist von seiner Topfrand-Seite her eine topfförmige Isolier-Abdeckkappe (3) dichtend im Sinne einer Abdichtung des Motorgehäuses (1) auch an seiner dem Topfboden abgewandten Seite aufgeschoben.

5. Elektromotor, insbesondere Kommutatormotor, nach Anspruch 4 mit dem Merkmal:
h) In der Isolier-Abdeckkappe (3) ist eine Anschlußleitung (9) für die Rotorwicklung von dem dem Topfboden abgewandten, insbesondere kommuzatorseitigen, Ende des Motorgehäuses (1) zu dem topfbodenseitigen Ende des Motorgehäuses (1) geführt.

6. Elektromotor nach Anspruch 5 mit dem Merkmal:
i) In die Außen-Mantelfläche der Isolier-Abdeckkappe (3) ist ein tunnelartiger Kabelkanal (3.1) für eine darin dichtend (Dichtung 9.2) eingelegte Anschlußleitung (9)vorgesehen.

7. Elektromotor nach zumindest einem der vorhergehenden Ansprüche mit dem Merkmal:
j) An dem Topfboden abgewandten Ende des Motorgehäuses (1) ist eine gleichzeitig als Bürszenhalter-Vorrichtung für einen Kommutatormotor ausgebildete weitere Lageraufnahme (Lagerbügel 2) vorgesehen, insbesondere mit dem Motorgehäuse (1) verstemmt.

## Claims

1. Electric motor with a deep-drawn, cup-type housing (1) for driving an assembly (2), especially a hydraulic pump of an anti-lock braking system, which can be flange-mounted onto the front side of the motor housing (1), having the following features:
a) into the base of the cup-shaped motor housing (1) there is formed in by deep-drawing, in a non-cutting procedure, a bearing journal (1.1) which protrudes axially outwards;
b) the bearing journal (1.1) is provided radially on the inside with a mounting fixture for the rotor shaft (4) of the electric motor, which mounting fixture is formed in by deep-drawing, in a non-cutting procedure;
c) the bearing journal (1.1) is provided radially on the outside with a fastening fixture for the assembly (2), which fastening fixture is formed in by deep-drawing, in a non-cutting procedure;
d) the bearing journal (1.1) is divided axially in step-shaped arrangement into at least two regions (1.11, 1.12) of different radially inner and radially outer diameters, of which the one radially smaller and axially outer region (1.11) is intended for the radially inner mounting fixture of the rotor shaft (4) and the other radially larger and axially inner region (1.12) is intended for the radially outer fastening fixture of the assembly (2).

2. Electric motor according to Claim 1, having the feature:
e) the radial widths of the one region (1.11) and of the other region (1.12) are defined according to the corresponding radial widths of an axially insertable bearing (4.3) for the rotor shaft (4) and of an axially mountable flange opening (2.1) of the assembly (2) respectively.

3. Electric motor according to at least one of the preceding claims, having the feature:
f) the radial widths of the one region (1.11) and of the other region (1.12) are defined with due regard to the production and material tolerances such that, in a calibration-finishing of the respective one receiving seat, the receiving region of the respective other receiving seat remains free from wall parts of the bearing journal (1.1), the said wall parts being forced away radially inwards or radially outwards.

4. Electric motor according to at least one of the preceding claims, having the feature:
g) onto the cup-type motor housing (1) there is slid, from its cup-rim side, a cup-shaped insulating cover cap (3), such that a seal is formed for the purpose of sealing off the motor housing (1) also on its side facing away from the cup-shaped base.

5. Electric motor, especially a commutator motor, according to Claim 4, having the feature:
h) in the insulating cover cap (3), a connecting line (9) for the rotor winding is guided from that end of the motor housing (1) facing away from the cup-shaped base, especially located on the commutator side, to that end of the motor housing (1) located on the cup-shaped base side.

6. Electric motor according to Claim 5, having the feature:
i) into the outer contacting face of the insulating cover cap (3) there is provided a tunnel-like cable duct (3.1) for a connecting line (9) inserted therein in seal-forming arrangement (seal 9.2).

7. Electric motor according to at least one of the preceding claims, having the feature:
j) at that end of the motor housing (1) facing away from the cup-shaped base there is provided a further mounting fixture (bearing bracket 2), which is simultaneously configured as a brush-holder device for a commutator motor, in particular caulked with the motor housing (1).

## Revendications

1. Moteur électrique, à carter (1) de moteur en forme de pot et obtenu par emboutissage profond, pour l'entraînement d'un groupe (2) pouvant être bridé du côté frontal au carter (1) de moteur, notamment d'une pompe hydraulique d'un dispositif anti-bloqueur de freinage, ayant les particularités :
a) il est formé par emboutissage profond sans enlèvement de copeaux dans le fond du pot du carter (1) du moteur un collet (1.1) de palier faisant saillie axialement vers l'extérieur ;
b) le collet (1.1) de palier est muni radialement à l'intérieur d'un logement de palier formé par emboutissage profond sans enlèvement de copeaux pour l'arbre (4) du rotor du moteur électrique ;
c) le collet (1.1) de palier est muni radialement à l'extérieur d'un logement de fixation formé par emboutissage profond sans enlèvement de copeaux pour le groupe (2) ;
d) le collet (1.1) de palier est subdivisé axialement par des gradins en au moins deux zones (1.11 ; 1.12) de diamètre radial intérieur ou radial extérieur différent, dont une zone (1.11) plus petite radialement et extérieure suivant l'axe est prévue pour le logement intérieur radial du palier de l'arbre (4) du rotor et dont l'autre zone (1.12) plus grande radialement et intérieure suivant l'axe est prévue pour le logement extérieur radial de fixation du groupe (2).

2. Moteur électrique suivant la revendication 1, ayant la particularité :
e) les largeurs radiales de l'une (1.11) ou de l'autre (1.12) des zones sont fixées en fonction des largeurs radiales correspondantes d'un palier (4.3) à insérer axialement pour l'arbre (4) du rotor et d'une ouverture (2.1) de bride du groupe (2) à poser axialement.

3. Moteur électrique suivant au moins l'une des revendications précédentes, ayant la particularité :
f) les largeurs radiales de l'une (1.11) ou de l'autre (1.12) des zones sont fixées en tenant compte des tolérances de finition ou de matériau, de manière que lors d'un usinage final de calibrage de respectivement un siège de logement la zone de logement de l'autre siège de logement demeure exempte de parties de parois du collet (1.1) de palier repoussées à cet endroit radialement vers l'intérieur ou radialement vers l'extérieur.

4. Moteur électrique suivant au moins l'une des revendications précédentes, ayant la particularité :
g) il est mis sur le carter (1) de moteur en forme de pot par le côté du bord du pot un capuchon (3) de couverture isolant en forme de pot et d'étanchéité en vue de rendre étanche le carter (1) du moteur également de son côté éloigné du fond du pot.

5. Moteur électrique, notamment moteur à collecteur, suivant la revendication 4, ayant la particularité :
h) il est guidé dans le capuchon (3) de couverture isolant une ligne (9) de raccordement pour l'enroulement du rotor, de l'extrémité du carter (1) du moteur, qui est éloignée du fond du pot et qui est notamment du côté collecteur, à l'extrémité du carter (1) du moteur, qui est du côté du fond du pot.

6. Moteur électrique suivant la revendication 5, ayant la particularité :
i) il est prévu dans la surface latérale extérieure du capuchon (3) de couverture isolant un canal (3.1) de passage de câbles du type tunnel pour une ligne (9) de raccordement introduite dans celui-ci de manière étanche (garniture d'étanchéité 9.2).

7. Moteur électrique suivant au moins l'une des revendications précédentes, ayant la particularité :
j) il est prévu à l'extrémité du carter (1) du moteur éloignée du fond du pot un logement supplémentaire de palier ayant la forme en même temps de dispositif porte-balai pour un moteur à collecteur (étrier 2 de palier) qui est maté notamment avec le carter (1) du moteur.
